# EUROPEAN PATENT APPLICATION

(11) **EP 2 727 650 A1**
(43) Date of publication of application: **07.05.2014**
(21) Application number: 13191695.9
(22) Date of filing: 05.11.2013
(51) Int. Cl.: B03C 1/18, B03C 1/30, A01K 5/00

(54) **Device for removing ferrous materials from mixed materials**

(30) Priority: 05.11.2012 IT MI20121878
(71) Applicant: CAEB International S.r.l., 20121 Milan (IT)
(72) Inventor: Pecis, Egidio, 24050 Zanica (BG) (IT)
(74) Representative: Simino, Massimo

(57) **Abstract**

A device (1) for removing ferrous materials from mixed materials comprises three magnetic rotary blades, which are distinct and parallel to one another (13,14,15), each rotary blade (13,14,15) being set in rotation about the respective longitudinal axis (X-X).

## Description

The present invention refers to a device for removing ferrous materials from mixed material according to the preamble of claim 1 for removing ferrous materials from mixed materials, such as food products for feeding animals or humans.

For the sake of simplicity of explanation, the present description is made in a non-limiting way considering mixed material to be products intended for feeding animals, with particular reference to feed, grain, seeds, forage, shredded vegetables in general and the like, thus concerning particularly the problems connected to animal feed. In any case, the same considerations can refer to any mixed material, be it edible or not and be it in loose, granular, powdered and whatever other form. Possible examples of mixed material worth noting are grain, flour, woodchips, pellets, sawdust, sand and yet more.

With reference to animal feed, it should be highlighted that the feed supplied must not have unwanted foreign elements that can cause damage to animal health, if not actually causing them to die.

Concerning this it is sufficient to refer to bovines to highlight how ingesting metallic elements such as nails, pieces of metal wire or other similar elements, if ingested by animals, can permanently damage the digestive apparatus of the animal, causing it to die following tearing and/or perforation with consequent internal haemorrhaging.

Unfortunately, the presence of the aforementioned unwanted metallic elements in the feed is far from infrequent with it being necessary to identify and remove them to avoid running into the problems highlighted above. For example, with reference to fodder it is clear how the use of metal wire to bind the bales of hay or grass inevitably leads to part of such metallic components being present in the fodder.

Furthermore, possible ferrous residues such as nails or pieces of iron wire may be present in the fodder since they are present in the fields at the moment of collection of the hay, grass and the like.

The requirement to be satisfied is that of managing to separate the totality, or at least the majority, of the aforementioned metallic elements from the fodder or other feed in order to avoid danger to animals.

Document EP-432702-A2 teaches to make an apparatus in which the fodder or other animal feed is passed through a duct defined by an upper wall, a lower wall, a right wall and a left wall, each of the aforementioned walls having a respective magnetic plate positioned at it in a fixed manner, said plate being intended to interact with the metallic materials present in the fodder as they pass through.

This technical solution is not particularly effective, since it is only able to act effectively on fodder that passes close to the aforementioned walls.

The requirement that needs to be satisfied is that of being able to remove ferrous materials from fodder or from other mixed material in an effective manner, by carrying out a true uniform sieving of such products, at the same time avoiding the production of a compacting effect in the mixed material.

Precisely in order to prevent the mixed material from being compacted after the removal of the ferrous materials, it is necessary to avoid the compacting step taking place in liquid or with the addition of water or with an increase in humidity of the mixed material.

The problem at the basis of the present invention is that of devising a device for removing ferrous materials from mixed material that has structural and functional characteristics such as to satisfy the aforementioned requirement, at the same time avoiding the aforementioned drawbacks with reference to the prior art.

Such a problem is solved by a device for removing ferrous materials from mixed or loose material according to claim 1.

According to a further aspect, the invention also refers to a conveyor belt for food according to claim 12, as well as to a mixing truck according to claim 14.

Further characteristics and advantages of the device for removing ferrous materials from mixed material according to the present invention will become clearer from the following description of some preferred example embodiments thereof, given for indicating and not limiting purposes, with reference to the attached figures, in which:
- figure 1 shows a schematic perspective view of a device for removing ferrous materials from mixed material in accordance with the present invention;
- figure 2 shows a plan side view of the device for removing ferrous materials from mixed material of figure 1;
- figure 3 shows a cross section view of the device of figure 1;
- figure 4 represents a perspective view of a blade of the device of figure 1;
- figure 5 represents a front plan view of the blade of figure 4,
- figure 6 represents a cross section view of the blade of figure 5, according to the section line VI-VI of figure 5 and
- figure 7 shows a cross section view of a plate used to define a half of the blade of figure 4.

With reference to the attached figures, reference numeral 1 globally indicates a device for removing ferrous materials from mixed material in accordance with the present invention.

In the example considered here, the mixed material therefore consists of fodder, or other partially shredded vegetable matter, intended for feeding animals.

Indeed, the device 1 is particularly suitable for being applied near to or at the discharge mouth of the feed of a mixing truck (not illustrated).

More specifically, near to the aforementioned discharge mouth of the mixing truck a conveyor belt 10 is applied to receive and take away the mixed material that comes out from the discharge mouth itself.

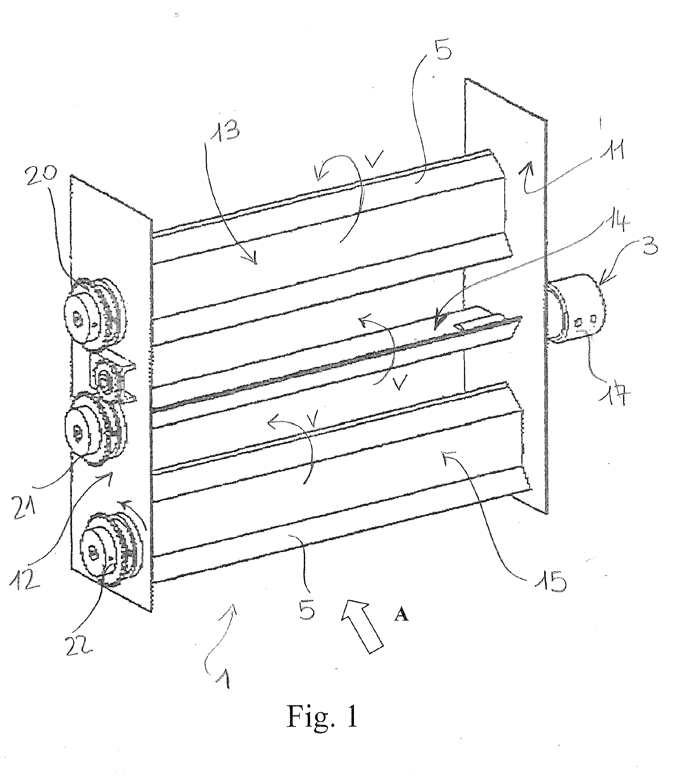

As can be seen from figures 1, 2 and 3, the device 1 is positioned so as to be positioned directly above the conveyor belt 10, so as to be directly hit by the flow of particulate material that moves forward along the conveyor belt 10. In the figures, the arrow A indicates the direction of forward motion of the conveyor belt 10 and of the fodder or other mixed material transported by such a belt.

In accordance with the illustrated embodiment, the device 1 for removing ferrous materials (not illustrated) from mixed materials (not illustrated), comprises:
- a framework that comprises two support shoulders 11, 12 faced in opposition to one another and spaced apart to define lateral containment walls of a passage channel extending from a rear entry end (the side visible in figure 1) to a front exit end, through which to pass the mixed material from which ferrous material needs to be removed and
- at least two magnetic elements, in the example three in number and marked with reference numerals 13, 14 and 15 respectively, of predetermined longitudinal axis X-X extending transversally between said shoulders 11, 12 to be positioned in said passage channel defined between the shoulders 11, 12.

The aforementioned magnetic elements 13, 14, 15 are distinct and spaced apart and are individually supported in said passage channel so as to be able to rotate about a respective and distinct rotation axis X-X, thus defining a rotary magnetic element.

As can be seen from the figures, the three rotary magnetic elements 13, 14, 15 are supported by the shoulders 11, 12 so as to be able to rotate, for example through the interposition of bearings at the opposite head ends 9 of their rotation shaft.

Preferably, the aforementioned rotary magnetic elements 13, 14, 15 extend substantially for the entire distance between the shoulders 11, 12, in other words for the entire transversal width of the aforementioned conveying channel. Concerning this, it should be highlighted that the transversal distance between the shoulders 11, 12 must be substantially equal to the transversal width of the conveyor belt 10.

The device comprises motor means 3 to set the aforementioned magnetic elements 13, 14, 15 in rotation about the respective and distinct rotation axis X-X.

Preferably, the rotary magnetic elements 13, 14, 15 are supported by the shoulders 11, 12 so as to have the respective axes parallel to one another in the transversal direction, extending horizontally, in other words according to a direction parallel to the conveyor belt 10.

Alternatively, according to an embodiment that is not illustrated, it is possible to arrange the rotary magnetic elements parallel to one another according to a vertical arrangement, in other words perpendicular to the conveyor belt.

Preferably, the rotary magnetic elements 13, 14, 15 are positioned at different heights to one another with reference to a first edge of said shoulders 11, 12 extending between said rear entry end and said front exit end, in the example of the figures the lower edge of the shoulders 11, 12. In particular, the rotary magnetic element 1 is the one positioned at a lower height and therefore it is the rotary magnetic element closest to the upper surface of the conveyor belt 10 on which the mixed material is supported and moved.

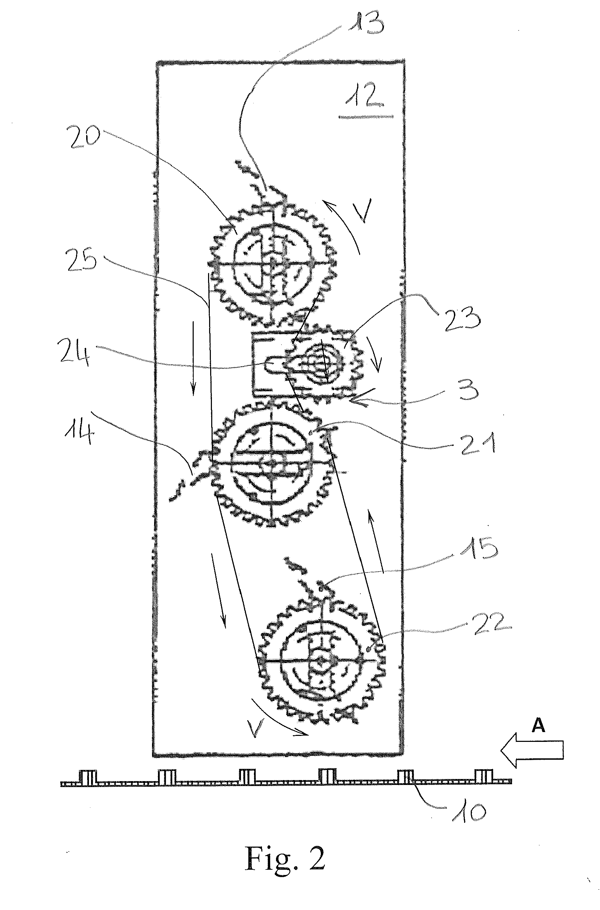

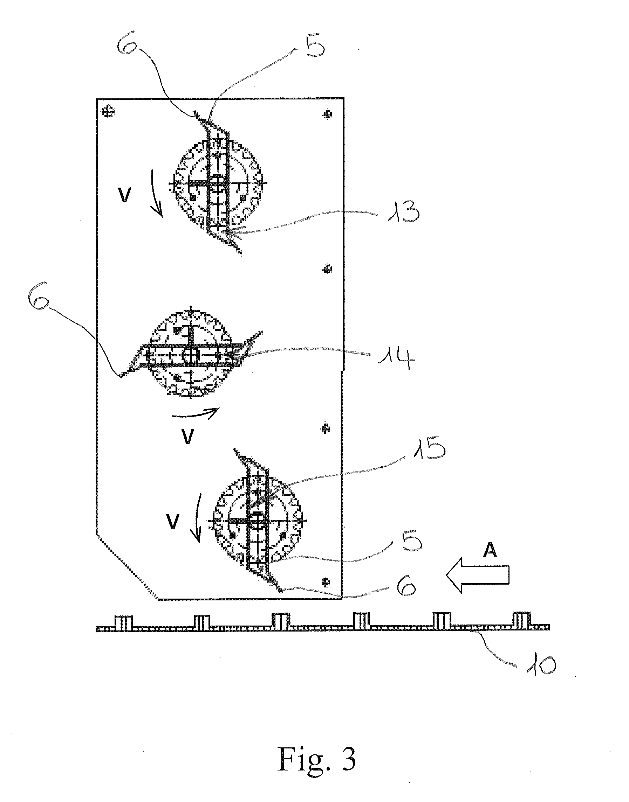

The rotary magnetic element 13 is the one arranged at a greater height, whereas the magnetic element 14 is the one arranged at an intermediate height between the other two (cf. figures 2 and 3).

With reference to the direction of forward motion A of the mixed material in the aforementioned channel between the aforementioned rear entry end and the aforementioned front exit end 3, the aforementioned rotary magnetic elements 13, 14, 15 are offset from one another. In particular, as can be seen from the figures, the lower rotary magnetic element 15 closest to the conveyor belt 10 is arranged farther back, in other words closer to the rear entry end of the device 1, with respect to the two remaining rotary magnetic elements 13 and 14 that, in the illustrated example are perfectly aligned on the same vertical.

The aforementioned motor means 3 comprise a motor 17 the drive shaft of which is kinematically connected so as to rotate as a unit with the intermediate rotary magnetic element 14 at the shoulder 11.

Mechanical transmission means then take care of transferring the motion to the remaining rotary magnetic elements 13 and 15 to determine a simultaneous and synchronous actuation in rotation.

Preferably, the motor 17 is an oil-hydraulic motor, so as to be able to be actuated by the hydraulic fluid of an agricultural machine. Alternatively, it is possible to use other types of motor, preferably an electric motor.

The aforementioned mechanical transmission means comprise a chain 25 that engages gear wheels 20, 21 and 22 respectively associated so as to rotate as a unit with the rotary magnetic elements 13, 14, 15 at the shoulder 12.

On the shoulder 12 a further idle wheel 23 is also fixed, arranged between the upper gear wheel 20 and the intermediate gear wheel 21. This gear wheel 23 can run along a horizontal guide 24 in contrast to an elastic element (not illustrated) that acts so as to push the wheel 23 towards the centre of the left shoulder 12. Basically, the wheel 23 constitutes an idler chain device.

Alternatively, the chain 25 can be replaced by a belt and the gear wheels 20, 21, 22 by pulleys.

Preferably, the rotary magnetic elements 13, 14, 15 define, around their rotation axis, a body 4 extending longitudinally along the rotation axis X-X for the entire length L and projecting transversally for a predetermined height H from said rotation axis X-X.

Purely for indication purposes, the transversal height H of the rotary magnetic elements 13, 14, 15 is at least 8 cm, preferably at least 12 cm.

Preferably, the aforementioned body 4 is a box-shaped body 4, inside which the permanent magnets (not represented for the sake of simplicity of representation), or alternatively electromagnets are advantageously housed in protected position. In the case in which electromagnets are used, it is necessary to foresee cabled electrical power supply means with which to excite the electromagnets when necessary.

Alternatively, it is possible for the body itself of the rotary magnetic elements 13, 14, 15 to be made entirely or partly with magnetized material or for it to be covered, at least partially, with permanent magnets or with electromagnets.

Preferably, each of the aforementioned magnetic elements 13, 14, 15 is supported in rotation with respect to the framework with interposition of at least one amagnetic portion. In the example of the figures, the opposite head ends 9 of the rotation shaft of each of the aforementioned magnetic elements 13, 14, 15 are made from amagnetic material, i.e. not magnetic, preferably stainless steel.

This makes it possible to avoid the magnetic force of the magnetic elements 13, 14, 15 being dispersed towards the aforementioned framework, reducing the magnetic attraction thereof on the ferrous materials to be removed from the mixed material.

In accordance with a different embodiment, the amagnetic material can be used to make the rotation seats of the head ends 9 and/or to make the support shoulders 11 and 12.

In accordance with the preferred embodiment illustrated in the figures, the aforementioned rotary magnetic elements constitute rotary blades 13, 14, 15 with which to be able to act effectively on the mixed material to lift it and therefore be able to better sift for the presence of possible ferrous material.

In order to satisfy this requirement, the body 4 of each rotary blade 13, 14, 15 comprises a first tapered end portion 5 so as to define a tip end 6 with which to act on the mixed material to lift it from the surface of the conveyor belt.

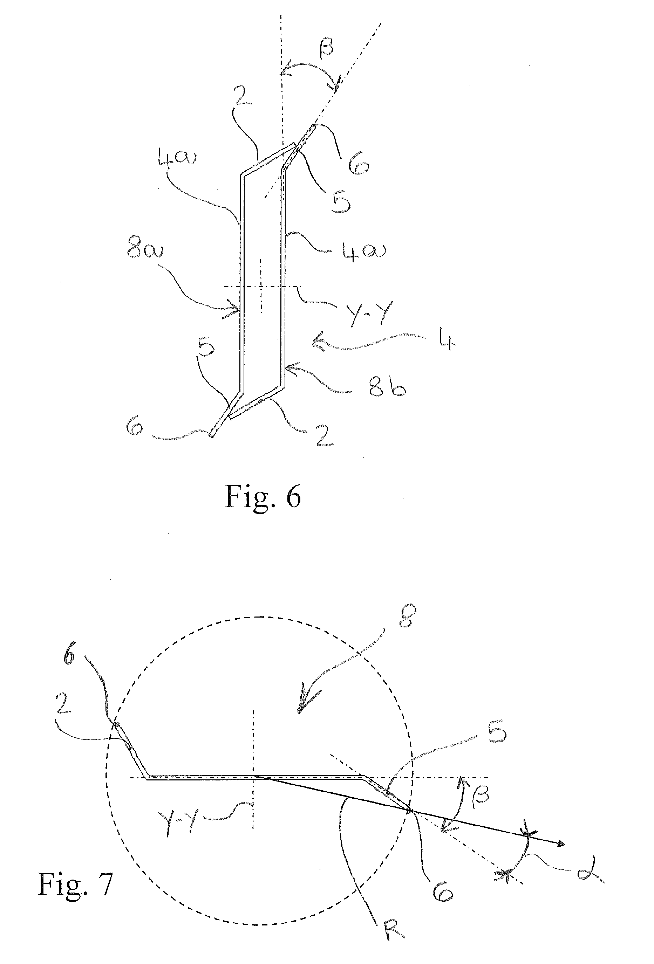

In accordance with a preferred embodiment, at least a first longitudinal end portion 5 of the body 4 of the rotary blades 13, 14, 15 is a tilted longitudinal end portion 5. In particular:
- with reference to a circumference C passing through the free end 6 of said first tilted end portion 5 and having the centre at said rotation axis X-X (cf. figure 7), said first tilted end portion 5 is tilted by a predetermined angle α with respect to the prosecution of a radius R (compare figure 7) of said circumference C passing through said free end 6 of said first tilted end portion 5 and
- with reference to the direction of rotation V with which each rotary blade 13, 14, 15 is set in rotation by the aforementioned motor means 3, the first longitudinal end portion 5 is tilted so that its free end 6 is farther forward with respect to the portion of said body 4 at the rotation axis X-X.

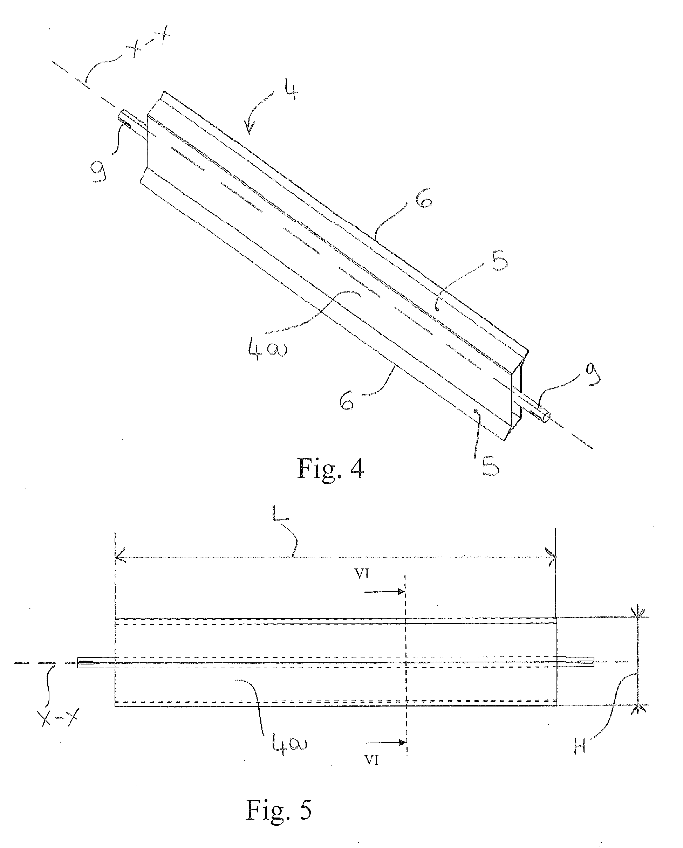

As can be seen from the figures, in particular figures 4 to 7, each rotary blade 13, 14, 15 comprises the aforementioned tilted first longitudinal end portion 5, as well as an opposite second longitudinal end portion 5 configured like said first longitudinal end portion 5, with the specification that the first longitudinal end portion 5 and the second longitudinal end portion 5 are tilted in substantially opposite directions. Each blade therefore takes up a substantially S or Z-shaped configuration.

Preferably, each rotary blade 13, 14, 15 comprises a substantially rectilinear central portion 4a passing through the rotation axis X-X and opposite longitudinal end portions 5, tilted opposite ways by a predetermined angle with respect to the extension of said central portion 4a substantially rectilinear.

The aforementioned opposite longitudinal end portions 5 of the rotary blades 13, 14, 15 are tilted with respect to the extension of said substantially rectilinear central portion 4a with an angle of inclination β comprised between 10° and 80°, preferably between 25° and 45°, more preferably between 30° and 40°, in the example of the figures 35°.

In order to keep down the production costs of the blades 13, 14, 15 and to simplify their production process, the box-shaped body 4 of the rotary blades 13, 14, 15 is advantageously obtained by joining matching plates 8 of predetermined height H extending longitudinally for the aforementioned length L along the rotation axis X-X.

Such plates 8:
- have the opposite longitudinal end portions, 2 and 5 respectively, tilted opposite ways with respect to the rectilinear central portion 4a, said opposite longitudinal end portions 2, 5 being additionally tilted with differing inclination values, as can be seen from figure 7 from which it can be seen that the tilted portion 2 is tilted more with respect to the tilted portion 5;
- are brought beside one another longitudinally so as to be transversally offset with respect to the rotation axis X-X of the respective rotary blade 13, 14, 15;
- are brought beside one another longitudinally so that a first plate 8a is brought up to a second plate 8b rotated substantially by 180° about its transversal axis Y-Y perpendicular to its longitudinal axis X-X with respect to the orientation of the first plate 8a (cf. figure 6) and
- are kept together permanently, for example through welding, to form a box-shaped hollow body 4.

Advantageously, the plates 8 are manganese steel plates.

Now going back to consider the conveyor belt 10, it has been stated that the rotary blade 15 is the one closest to the upper surface of the belt. In particular, the magnetic rotary blade 15 during its rotation comes close to the upper surface of the conveyor belt without interfering with it, preferably up to a distance of less than 15 cm, for example 5 cm.

It should be highlighted that the rotary magnetic blade 15 is set in rotation with circular motion having a tangential component opposite to the speed for forward motion A of the conveyor belt 10 at the lower point of its circular trajectory. This allows the rotary magnetic blade 15 to lift the mixed material from the surface of the conveyor belt 15, also making it accessible to the two remaining magnetic rotary blades 13, 14 thus ensuring accurate sifting of the possible ferrous materials present. Concerning this, it is only worth highlighting that the presence of the permanent magnets, or possibly of the electromagnets, makes it possible to attract all the ferrous materials that pass around the aforementioned blades, with the further specification that the characteristic of such magnetic blades of being individually set in rotation with respect to the respective axis X-X makes it possible to accurately sift the entire cross section of the aforementioned channel inside which the mixed material is conveyed.

The operation of the device according to the invention is clear from what has been described and illustrated and, in particular, it is as explained hereafter.

The mixing truck, arranged with the conveyor belt 10 and the device 1 for the removal of ferrous materials from mixed materials, is filled with the feed, in general of vegetable origin such as hay, grass and the like, according to the desired quality and quantity, it is mixed and then it is conveyed towards the discharge mouth, at which the conveyor belt is located.

The motor 17 is activated, so as to set the rotary blades 13, 14, 15 in simultaneous and synchronous rotation. The actuation of the aforementioned rotary blades lifts the mixed material from the upper surface of the conveyor belt 10, where such material tends to collect through the effect of its own weight.

Basically, the mixed material is forced to pass between the rotary magnetic blades 13, 14, 15 coming into close contact with them, so that, in the case in which there is ferromagnetic metallic material, it would be unstoppably attracted by the rotary magnetic blades 13, 14, 15, thus being separated and removed from the mixed material that continues in its path coming out from the front exit end of the device 1.

Preferably, the distance between the ends of one blade and the closes blade is equal to or greater than 8-10 cm, so as to allow a worker to insert his hand.

As can be appreciated from what has been described, the device for removing ferrous materials from mixed materials according to the present invention makes it possible to satisfy the aforementioned requirements and at the same time overcome the drawbacks referred to in the introductory part of the present description with reference to the prior art.

In particular, the sifting and removal action of the ferrous material from the mixed material can be carried out dry, in other words without adding liquids and therefore without increasing the degree of wetness of the mixed material.

Of course, a man skilled in the art can bring numerous modifications and variants to the device for removing ferrous materials from mixed materials described above, in order to satisfy contingent and specific requirements, all of which are in any case covered by the scope of protection of the invention as defined by the following claims.

Thus, for example, it is possible to consider magnetic rotary blades configured so as to define a comb with a plurality of teeth, in other words with a discontinuous structure with respect to the blade depicted in figure 4, which is continuous and has a constant width for the entire transversal length of the magnetic rotary blade.

## Claims

1. Device for removing ferrous materials from mixed materials, comprising:
- a framework that comprises two support shoulders (11, 12) faced in opposition to one another and spaced apart to define lateral containment walls of a passage channel extending from a rear entry end to a front exit end through which to pass the mixed material from which ferrous material needs to be removed and
- at least two magnetic elements (13, 14, 15) of predetermined longitudinal axis (X-X) extending transversally between said shoulders (11, 12) to be positioned in said passage channel,
**characterised in that:**
- said at least two magnetic elements (13, 14, 15) are distinct and spaced apart;
- each of said at least two magnetic elements (13, 14, 15) is supported in said passage channel so as to be rotatable about a respective and distinct rotation axis (X-X), thus defining a rotary magnetic element and
- said device comprises motor means (3) to set said at least two magnetic elements (13, 14, 15) in rotation about the respective and distinct rotation axis (X-X).

2. Device according to claim 1, wherein:
- the rotation axes (X-X) of said rotary magnetic elements (13, 14, 15) are parallel to one another;
- in said passage channel said rotary magnetic elements (13, 14, 15) are offset from one another with reference to the direction of forward motion (A) of the mixed material in said channel between said rear entry end and said front exit end and
- said rotary magnetic elements (13, 14, 15) are positioned at mutually different heights with reference to a first edge of said shoulders (11, 12) extending between said rear entry end and said front exit end.

3. Device according to claim 1 or 2, wherein said rotary magnetic elements (13, 14, 15) comprise a hollow box-shaped body (4) inside which permanent magnets or electromagnets are housed.

4. Device according to any one of claims 1 to 3, wherein said rotary magnetic elements constitute rotary blades (13, 14, 15) to act on the mixed material.

5. Device according to claim 4, wherein each rotary blade (13, 14, 15) comprises a body (4) extending longitudinally along said rotation axis (X-X) and projecting for a predetermined height from said rotation axis (X-X), wherein at least a first longitudinal end portion (5) of said body comprises a first tapered end portion so as to define a tip end (6) with which to act on the mixed material in order to lift it.

6. Device according to claim 4 or 5, wherein;
- each rotary blade (13, 14, 15) comprises a body (4) extending longitudinally along said rotation axis (X-X) and projecting transversally for a predetermined height from said rotation axis (X-X),
- at least a first longitudinal end portion (5) of said body (4) comprises a first tilted longitudinal end portion (5) and
- with reference to a circumference (C) passing through the free end (6) of said first tilted end portion (5) and having its centre at said rotation axis (X-X), said first tilted end portion (5) is tilted by a predetermined angle (α) with respect to the prosecution of a radius (R) of said circumference (C) passing through said free end (6) of said first tilted end portion,
- each rotary blade (13, 14, 15) is actuated in rotation by said motor means (3) in a first direction of rotation (V) and
- with reference to said first direction of rotation (V), said longitudinal end portion (5) is tilted so that its free end (6) is farther forward with respect to the portion of said body (4).

7. Device according to claim 5 or 6, wherein:
- said body (4) of each rotary blade (13, 14, 15) comprises said first longitudinal end portion (5) and an opposite second longitudinal end portion (5) configured like said first longitudinal end portion (5) and
- said first longitudinal end portion (5) and said second longitudinal end portion (5) being tilted substantially opposite ways to one another.

8. Device according to any one of claims 5 to 7, wherein each rotary blade (13, 14, 15) comprises a body (4) extending longitudinally along said rotation axis (X-X) and projecting for a predetermined height from said rotation axis (X-X), said body (4) comprising a substantially rectilinear central portion (4) passing through said rotation axis (X-X) and opposite longitudinal end portions (5) tilted in opposite ways by a predetermined angle with respect to the extension of said substantially rectilinear central portion.

9. Device according to claim 8, wherein said opposite longitudinal end portions (5) are tilted with respect to the extension of said substantially rectilinear central portion (4a) with an angle of inclination (β) comprised between 10° and 80°, preferably between 25° and 45°, more preferably between 30° and 40°.

10. Device according to claim 8 or 9, wherein:
- the body (4) of said rotary blades (13, 14, 15) is a hollow box-shaped body (4) obtained by joining two matching plates (8) of predetermined height (H) extending longitudinally along said rotation axis (X-X);
- said plates (8) have the opposite longitudinal end portions (5) tilted opposite ways with respect to a rectilinear central portion (4a), said opposite longitudinal end portions (5) being tilted with differing inclination values;
- said plates (8) are brought beside one another longitudinally to be transversally offset with respect to the rotation axis (X-X) of the respective rotary blade (13, 14, 15);
- said plates (8) are brought beside one another longitudinally so that a first plate (8a) is brought up to a second plate (8b) rotated substantially by 180° about its transversal axis (Y-Y) perpendicular to the longitudinal axis (X-X) with respect to the orientation of the first plate (8a) and
- said plates (8) are kept together permanently to form a box-shaped hollow body (4).

11. Device according to any one of claims 1 to 10, wherein each of said at least two magnetic elements (13, 14, 15) is supported in rotation with respect to said framework with interposition of at least an amagnetic portion, preferably through stainless steel rotation pins.

12. Conveyor belt for transporting mixed material, **characterised in that** it comprises a device for removing ferrous materials from mixed materials according to any one of claims 1 to 11, said device being positioned above said conveyor belt, wherein:
- said rotary magnetic elements (13, 14, 15) are positioned at different heights with respect to the upper surface of said conveyor belt (10) and
- the rotary magnetic element (15) arranged at a lower height is positioned a distance of less than 15 cm from the upper end of the conveyor belt (10) without making contact with such a belt.

13. Conveyor belt for transporting mixed material according to claim 12, wherein said rotary magnetic element (15) arranged at a lower height is set in rotation with circular motion having a tangential component opposite to the speed for forward motion (A) of the conveyor belt (10) at the lower point of the circular trajectory.

14. Mixing truck for preparing animal feed, comprising a discharge mouth for particulate material, preferably fodder, to come out from, **characterised in that characterised in that** it comprises a conveyor belt (10) according to claim 12 or 13 positioned close to said discharge mouth to receive and take away the mixed material that comes out from said discharge mouth.
